# FASCICULE DE BREVET EUROPEEN

(11) **EP 1 007 456 B1**
(45) Date de publication et mention de la délivrance du brevet: **16.10.2002**
(21) Numéro de dépôt: 98940335.7
(22) Date de dépôt: 24.07.1998
(51) Int. Cl.: B65G 51/03

(54) **CONVOYEUR POUR TRANSPORTER DES ARTICLES POURVUS D'UNE COLLERETTE OU SIMILAIRE**
FÖRDERER ZUM TRANSPORTIEREN VON ARTIKELN MIT EINEM KRAGEN ODER DERGLEICHEN
CONVEYOR FOR TRANSPORTING ARTICLES PROVIDED WITH A FLANGE OR THE LIKE

(30) Priorité: 25.08.1997 FR 9710770
(43) Date de publication de la demande: 14.06.2000
(60) Demande divisionnaire: 01130946.5
(73) Titulaire: Netra Systems, 59700 Marcq en Baroeul (FR)
(72) Inventeur: LAQUAY, Fabien, F-59510 Hem (FR); MEUNIER, Jean-Luc, F-62300 Lens (FR); BLANCHET, Gilles, F-59280 Armentières (FR); TRAVAIL, Bruno, F-59650 Villeneuve d'Ascq (FR); TRENEL, Jo[l, F-59700 Marcq en Baroeul (FR); DECLERCQ, Philippe, B-Ploegsteert (BE)
(74) Mandataire: Matkowska, Franck
(86) Numéro de dépôt international: FR9801646
(87) Numéro de publication internationale: WO99010263

(56) Documents cités:
- GB-A- 2 092 981
- US-A- 5 161 919
- US-A- 5 421 678

## Description

La présente invention concerne le convoyage d'articles comportant une collerette ou similaire, formant protubérance, et permettant leur suspension en cours de transport. Elle a plus particulièrement pour objet un convoyeur dans lequel les articles sont transportés en étant suspendus par l'intermédiaire de leur collerette sur deux guides sous-col faisant office de rails de guidage, et en étant plus particulièrement propulsés les uns derrière les autres au moyen d'un flux d'air. Elle trouve principalement son application au transport d'articles légers en plastique, tels que des récipients (flacons ou bouteilles, etc...) en PET, PVC, etc..., notamment lors des opérations de conditionnement de ces articles, le convoyeur étant par exemple utilisé pour acheminer en ligne des récipients vides depuis une machine amont de fabrication de ces récipients (souffleuse) jusqu'à une machine aval de remplissage des récipients (soutireuse).

Dans le domaine de l'embouteillage, il est à ce jour largement répandu d'utiliser des convoyeurs pneumatiques dans lesquels des bouteilles vides, ou d'une manière plus générale des articles, sont guidés les uns derrière les autres entre deux guides sous-col en étant supportés, par l'intermédiaire d'une protubérance (collerette) de leur col. Les articles sont mis en mouvement unitairement les uns derrière les autres ou par trains entiers de bouteilles, sous l'action de jets d'air. De tels convoyeurs ont par exemple déjà été décrits dans la demande de brevet internationale WO90/10587, et dans la demande de brevet anglais GB.2.092.981. Dans ces deux publications, les jets d'air de transport sont principalement dirigés sur le col des articles au-dessus de leur collerette. Dans d'autres types de convoyeurs connus, les jets d'air de transport peuvent également être dirigés sur le corps des articles au-dessous du niveau de la collerette.

Au cours de leur transport, les articles qui sont supportés uniquement par leur collerette, ont tendance à basculer par rapport à la verticale. Le basculement des récipients par rapport à la verticale dans une direction transversale à leur direction de transport nuit à leur convoyabilité et occasionne en outre des risques de décrochements ou de coincement des articles. Il a donc à ce jour été proposé de limiter ce basculement dans une direction transversale à la direction de transport en équipant les convoyeurs de guide latéraux positionnés de part et d'autre du chemin de transport des articles. En pratique ces guides latéraux sont positionnés au niveau d'une portion cylindrique du corps des articles, en étant écartés l'un de l'autre d'une distance légèrement supérieure au diamètre de cette portion cylindrique. Les articles sont donc supportés par leur collerette et maintenus essentiellement verticalement au cours de leur transport dans un plan vertical transversal à leur direction de transport au moyen de ces guides. Les guides précités ne sont toutefois pas suffisants pour obtenir un bon convoyage des articles. En particulier, ces guides ne permettent pas d'éviter un blocage des articles au cours de leur transport.

En pratique, les blocages des articles en cours de transport apparaissent le plus fréquemment en phase d'accumulation des articles, c'est-à-dire dans une phase au cours de laquelle les articles forment un train statique ou en déplacement à très faible vitesse, les articles étant au contact et comprimés les uns contre les autres.

Ces blocages des articles en phase d'accumulation ont plusieurs causes. D'une manière générale, les articles étant comprimés les uns contre les autres, ils exercent une poussée qui tend à les faire remonter verticalement par rapport aux guides sous-col. Il peut arriver dans ce cas qu'au moins un des articles, du fait de cette remontée verticale, vienne se bloquer en position par serrage entre les guides sous-col. Il arrive également lorsque les articles ont un profil qui contribue à leur emboîtement ou encastrement les uns par rapport aux autres, qu'en cas de remontée verticale, les articles se bloquent les uns par rapport aux autres, sans nécessairement se bloquer par serrage entre les guides sous-col. Il a également été constaté que les risques de blocage étaient plus fréquents lors du transport d'articles en plastique, et notamment de bouteilles en PET, issues directement d'une souffleuse. Ceci peut s'expliquer par le fait que la résine thermoplastique constitutive des parois des articles en plastique issus de la souffleuse est dans un état tel que les parois de ces articles sont collantes, et qu'un simple frottement d'un article l'un par rapport à l'autre lors de la remontée des articles, aboutit au collage des articles entre-eux. Une autre cause de blocage des articles en phase d'accumulation est liée au fait qu'un article arrivant avec une vitesse importante au contact d'un train d'articles accumulés, a tendance à basculer de manière importante par rapport à la direction de transport en prenant appui sur le dernier article du train accumulé. L'article suivant vient alors, en appui contre la basé de cet article incliné dans la direction de transport, et exerce sur celui-ci une poussée mécanique qui tend à le faire remonter entre les guides sous-col et à le bloquer en position inclinée.

Il a déjà été proposé dans le brevet US.5,421,678 d'équiper un convoyeur à air de guides-épaules supérieurs (référencés 42 sur les figures 4,7 et 8 de ce document), dont la fonction principale est de faire office de butée en cas de remontée des articles. Cette solution présente toutefois les deux inconvénients majeurs suivants. Avec cette solution, on réduit certes le problème de blocage des récipients entre les guides sous-col, mais on fait apparaître un nouveau risque de blocage des récipients entre les guides-épaules, en particulier lors de la remontée des récipients en phase d'accumulation. Cette solution n'est donc pas satisfaisante au regard du problème de blocage des articles en phase d'accumulation. L'autre inconvénient de cette solution est lié au problème de la détermination du réglage optimal de l'écartement des guides-épaules l'un par rapport à l'autre. En effet, en agissant sur l'écartement entre les guides-épaules, on autorise plus ou moins la remontée des articles ; en pratique plus les guides-épaules sont proches l'un de l'autre, meilleur est le blocage vertical des articles. Néanmoins, en agissant sur l'écartement des guides-épaules l'un par rapport à l'autre, on agit également sur l'angle de basculement avant ou arrière dans un plan vertical des articles dans leur direction de transport ; en pratique, plus l'écartement des guides-épaules est faible, et plus l'angle de basculement des articles est limité. Or il est connu qu'un angle de basculement trop important des articles au cours de leur transport peut occasionner un blocage avant ou arrière des articles par rapport aux guides sous-col, mais qu'il est toutefois nécessaire que les articles en cours de transport puissent osciller légèrement par rapport à la vérticale dans leur direction de transport d'un angle de basculement minimum afin d'obtenir une meilleure convoyabilité des articles. Avec la solution de guides épaules supérieurs du brevet US.5,421,678, on est donc obligé de choisir un réglage de l'écartement des guides-épaules en fonction de deux contraintes : assurer une butée efficace à la remontée des articles et obtenir une bonne limitation de l'angle de basculement avant ou arrière des articles au cours de leur transport. Ces deux contraintes rendent difficile le choix du réglage de l'écartement optimum des guides-épaules.

La présente invention propose une nouvelle solution permettant de réduire les risques de blocage des articles, en particulier en phase d'accumulation, tout en palliant les deux inconvénients précités inhérents à la mise en oeuvre de guides-épaules supérieurs à fonction de butée telle qu'elle est qu'enseignée dans le brevet US.5,421,678.

Le convoyeur de l'invention est connu en ce qu'il comporte deux guides sous-col espacés le long desquels les articles sont destinés à être transportés en étant suspendus sur les guides sous-col par l'intermédiaire de leur collerette ou similaire. On désigne ici par le terme "collerette", toute protubérance des articles permettant leur suspension en cours de transport.

De manière caractéristique selon l'invention, le convoyeur comprend une cale rapportée longitudinale, qui est montée au-dessus des guides sous-col, et qui a pour fonction de limiter la remontée des articles entre les guides sous-col.

Plus particulièrement, lorsque les articles comportent au-dessous de leur collerette une portion de resserrement dont la section décroît en direction de la collerette, et passe par une section de contact dont le diamètre est égal à l'écartement des guides sous-col, la cale du convoyeur est de préférence prévue à une distance des guides sous-col, qui est telle qu'il existe, entre la cale et l'extrémité supérieure d'un article supporté en position verticale par les guides sous-col, un jeu résiduel qui est strictement inférieur à la hauteur de contact séparant les guides sous-col et la section de contact de cet article en position verticale. Cette caractéristique permet d'éviter le blocage d'un article par serrage entre les guides sous-col, en cas de remontée d'un article en position verticale.

Dans le cadre du concept le plus général de l'invention, la butée haute peut être simplement constituée par une cale d'épaisseur donnée fixée au-dessus des guides sous-col, par exemple sur la face interne de la paroi supérieure du canal de soufflage du convoyeur. Dans ce cas, la cale n'étant pas réglable en hauteur, son épaisseur sera choisie en fonction des articles à transporter, de telle sorte que la cale remplisse sa fonction de butée haute. Dans une autre variante simplifiée, la calé pourra être réglable en hauteur, en sorte d'être réglée en position en fonction des articles à transporter. Ces variantes simplifiées de mise en oeuvre de l'invention présentent toutefois l'inconvénient suivant : la distance séparant la face inférieure de la cale par rapport aux deux guides sous-col doit être choisie la plus faible possible pour limiter au mieux les risques de blocage d'un article en cas de remontée de cet article, mais doit être suffisamment importante pour ne pas gêner les articles en cours de transport, et en particulier pour que l'extrémité supérieure des articles, qui ont tendance à osciller d'avant en arrière au cours de leur transport, ne viennent pas lors de ces mouvements d'oscillation au contact de cette butée haute.

Pour pallier cet inconvénient, il est proposé deux variantes préférées de mise en oeuvre de l'invention.

Dans une première variante préférée de réalisation, la cale comporte une face inférieure longitudinale à fonction de butée dans laquelle est prévu un canal central longitudinal de largeur strictement inférieure au diamètre d'un article au niveau de son extrémité supérieure. Ce canal central longitudinal permet avantageusement la remontée d'une portion de l'extrémité supérieure d'un article, au-dessus du niveau de la face inférieure à fonction de butée de la cale, lors du basculement avant ou arrière de cet article dans sa direction de transport. En choisissant judicieusement la géométrie de ce canal central, on autorise un basculement avant ou arrière plus ou moins important des articles, sans que ceux-ci ne viennent au contact de la cale. Plus particulièrement, la géométrie du canal central de la cale, et notamment la hauteur et la largeur de ce canal, est prévue de telle sorte qu'il existe un jeu résiduel entre la cale et l'extrémité supérieure d'un article supporté par les guides sous-col selon un angle de basculement avant ou arrière de 45°.

Dans une seconde variante préférée de réalisation, la cale est réglable en hauteur par rapport aux guides sous-col, dans au moins deux positions :
- une position haute dans laquelle les articles peuvent être transportés librement sans que leur extrémité supérieure ne vienne en contact avec la butée haute,
- une position basse, permettant de limiter la remontée des articles entre les guides sous-col, en particulier en phase d'accumulation.

De manière avantageuse, le convoyeur de l'invention peut en outre comprendre deux guides longitudinaux supérieurs qui sont positionnés de part et d'autre du trajet des articles, et qui ont pour fonction de limiter l'angle de basculement avant ou arrière des articles dans un plan vertical et dans leur direction de transport. Dans le cadre de l'invention, et contrairement aux guides épaules supérieurs du brevet US.5,421,678, ces guides longitudinaux supérieurs n'ont pas pour fonction de faire office de butée haute à une remontée des articles, mais ont uniquement pour fonction de limiter le basculement avant ou arrière des articles. Les deux contraintes respectivement de blocage de la remontée des articles et de limitation de l'angle de basculement des articles sont ainsi avantageusement dissociées l'une dé l'autre.

D'autres caractéristiques et avantages de l'invention apparaîtront plus clairement à la lecture de la description ci-après de plusieurs variantes de réalisation d'un convoyeur selon l'invention, laquelle description est donnée à titre d'exemple non limitatif et en référence au dessin annexé sur lequel :
- La figure 1 est une coupe transversale schématique d'une variante simplifiée d'un convoyeur à air selon l'invention, utilisé pour le transport de bouteilles, et mettant en oeuvre en guise de butée haute une cale rapportée d'épaisseur constante,
- La figure 2 schématise le jeu résiduel (Jr') existant entre la cale à fonction de butée haute et l'extrémité supérieure du col d'une bouteille inclinée d'un angle de basculement (B) par rapport à la verticale et dans la direction de transport,
- La figure 3 est une coupe transversale de principe d'une première variante perfectionnée d'un convoyeur à air de l'invention mettant en oeuvre une cale avec un évidement central formant un canal longitudinal,
- La figure 4 est une vue de principe d'une deuxième variante perfectionnée de réalisation d'un convoyeur à air selon l'invention, mettant en oeuvre une butée haute à hauteur réglable,
- et la figure 5 est une coupe de principe d'une troisième variante perfectionnée de réalisation d'un convoyeur à air selon l'invention, mettant en oeuvre une cale évidée avec plaque mobile à hauteur réglable.

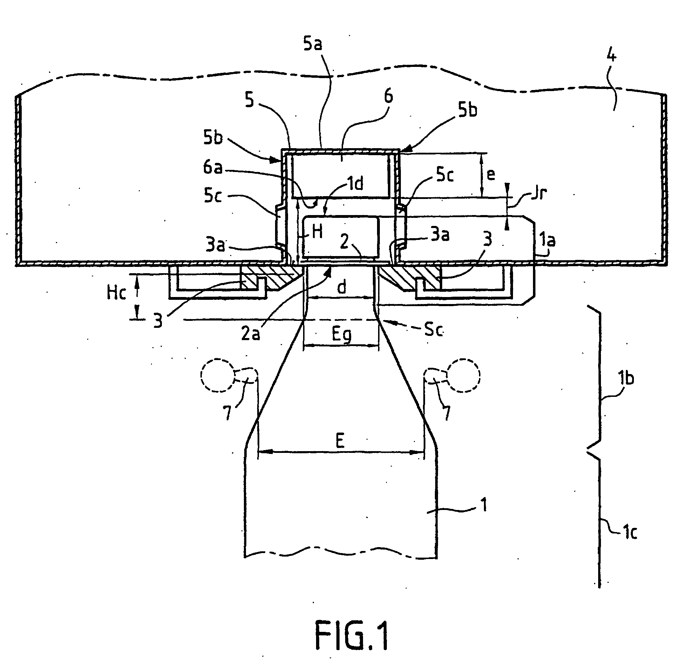

Le convoyeur illustré schématiquement à la figure 1 est utilisé pour transporter, par voie pneumatique, des bouteilles 1 en ligne les unes derrière les autres. Chaque bouteille 1 comporte un col 1a, correspondant au goulot de la bouteille, qui dans l'exemple particulier illustré est sensiblement cylindrique de diamètre d, et est pourvu au niveau de son col 1a d'une collerette 2 externe formant protubérance. Chaque bouteille 1 comprend en outre un corps principal 1c de forme sensiblement cylindrique, se prolongeant par une portion de resserrement 1b qui s'étend jusqu'au col 1a et dont la section décroît en direction de la collerette 2. Les bouteilles 1 sont transportées en étant suspendues sur deux rails de guidage 3, plus communément appelés guides sous-col. Dans l'exemple particulier illustré à la figure 1, le convoyeur comprend un caisson de soufflage 4, ayant une section sensiblement rectangulaire, et alimenté de manière usuelle avec de l'air sous pression qui a de préférence été préalablement filtré. A l'intérieur du caisson de soufflage 4 est aménagé un canal de soufflage 5 de plus faible section en forme de U renversé et délimité par une paroi supérieure 5a et deux parois latérales 5b. Le canal de soufflage 5 communique avec le caisson de soufflage 4 par l'intermédiaire de fentes 5c aménagées dans les parois latérales 5b et réparties judicieusement sur toute la longueur du canal de soufflage 5. L'air sous pression à l'intérieur du caisson 4 pénètre à l'intérieur du canal de soufflage 5 en étant dirigé sur les bouteilles 1 au-dessus de leur collerette 2, et entraîne par là-même les bouteilles les unes derrière les autres dans une direction transversale au plan de la figure 1, les bouteilles 1 étant guidées et supportées au cours de leur transport par les guides sous-col 3. Dans une autre variante de réalisation, l'air de transport pourrait également être soufflé en direction du corps des bouteilles, au-dessous de leur collerette 2, en étant par exemple canalisé entre deux parois latérales verticales situées de part et d'autre du chemin de transport des bouteilles.

Dans la variante de la figure 1, le convoyeur est équipé d'une cale longitudinale rapportée 6, d'épaisseur constante e. Cette cale 6 est fixée par tout moyen approprié connu sur la face intérieure de la paroi supérieure 5a du canal de soufflage 5. Cette cale 6 s'étend longitudinalement sur toute la longueur du canal de soufflage 5. Cette cale 6 fait office de butée haute et permet de limiter la remontée des bouteilles entre les guides sous-col 3. Le choix de l'épaisseur e de la cale 6 permet de fixer la distance H séparant la face inférieure 6a de la cale 6 à fonction de butée haute, de la face supérieure 3a des guides sous-col 3, et par là-même de régler la hauteur de la butée haute en fonction des articles à transporter. De préférence, l'épaisseur e de la cale 6 (c'est-à-dire en d'autres termes la distance H) est fixée de telle sorte qu'il existe, entre la face inférieure 6a de la cale 6 et l'extrémité supérieure 1d d'une bouteille supportée en position verticale par les guides sous-col 3 (figure 1), un jeu résiduel Jr qui est strictement inférieur à la hauteur de contact Hc, c'est-à-dire à la distance séparant les guides sous-col 3 et la section de contact Sc de la bouteille. Cette section de contact Sc correspond à la section droite de la portion de resserrement 1b de la bouteille dont le diamètre est égal à l'écartement Eq des guides sous-col 3. Grâce à cette caractéristique, on évite ainsi avantageusement, en cas de remontée de la bouteille 1 en position verticale entre les guides sous-col 3, que la section de contact Sc n'atteigne les guides sous-col 3, ce qui permet par là-même d'éviter un blocage en position verticale de la bouteille par serrage entre les deux guides sous-col 3. D'une manière plus générale, la cale 6 permet en limitant la remontée d'une bouteille 1, de réduire les risques de blocage des bouteilles 1 en phase d'accumulation lorsque les bouteilles remontent les unes par rapport aux autres sous l'effet de compression qu'elles exercent les unes sur les autres, ou lorsque les bouteilles remontent en basculant en phase d'accostage.

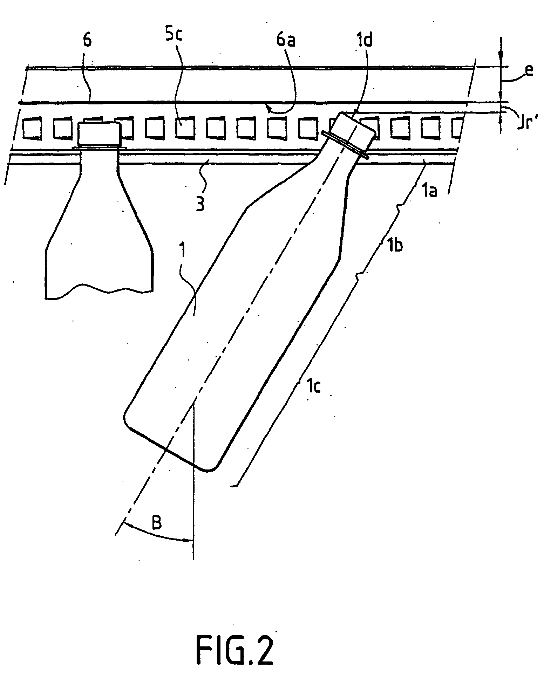

On comprend qu'en phase d'accumulation des bouteilles 1, l'efficacité de la cale 6 à fonction de butée haute est d'autant meilleure que le jeu résiduel Jr (figure 1) est faible. Dans la variante de la figure 1, ce jeu Jr doit toutefois être prévu suffisamment important pour ne pas perturber le mouvement des bouteilles 1 au cours de leur transport tel que cela apparaîtra plus clairement à la lumière de la figure 2.

Si l'on se réfère à la figure 2, au cours de leur transport, les bouteilles 1 ont tendance à osciller en avant et en arrière autour de leur position d'équilibre vertical, dans leur direction de transport, selon un angle de basculement référencé B sur cette figure. La valeur maximale de cet angle B peut par exemple avantageusement être réglée à l'aide de guides longitudinaux 7 (figure 1), qui sont positionnés de part et d'autre du chemin de transport des bouteilles, au niveau de la portion de resserrement 1b des bouteilles 1, et dont l'écartement E est réglable. En réglant l'écartement E des guides longitudinaux 7, on règle avantageusement l'angle maximum de basculement avant ou arrière B des bouteilles 1 dans leur direction de transport. De préférence, les deux guides longitudinaux 7 sont réglés en position de telle sorte que l'angle B soit inférieur ou égal à 30°, ce qui permet de limiter efficacement les risques de blocage d'une bouteille 1 par basculement avant ou arrière en cours de transport. En outre, les deux guides 7 sont de préférence réglés en position de telle sorte que cet angle B soit supérieur ou égal à 10°. Il a été en effet mis en évidence qu'en deçà d'une valeur de 10° pour l'angle de basculement B, les bouteilles avaient tendance de manière préjudiciable à leur bon convoyage à être transportées en oscillant de manière saccadée et trop rapide autour de leur position d'équilibre.

Lorsqu'une bouteille 1 bascule en avant ou en arrière dans sa direction de transport d'un angle B, une portion de son extrémité supérieure 1d remonte du fait de ce basculement, tel que cela apparaît sur la figure 2. Pour éviter de perturber le déplacement des bouteilles 1, il est donc essentiel qu'en cas de basculement d'une bouteille 1 d'un angle B, l'extrémité 1d ne vienne pas au contact de la face inférieure 6a de la cale 6, ce qui est matérialisé sur la figure 2 par un jeu résiduel Jr'. De préférence, sachant que la remontée de l'extrémité 1d de la bouteille 1 est maximale lorsque l'angle de basculement B avant ou arrière de la bouteille 1 vaut 45°, l'épaisseur de la cale sera choisie de telle sorte qu'il existe un jeu résiduel Jr' en cas de basculement de la bouteille d'un angle B valant 45°.

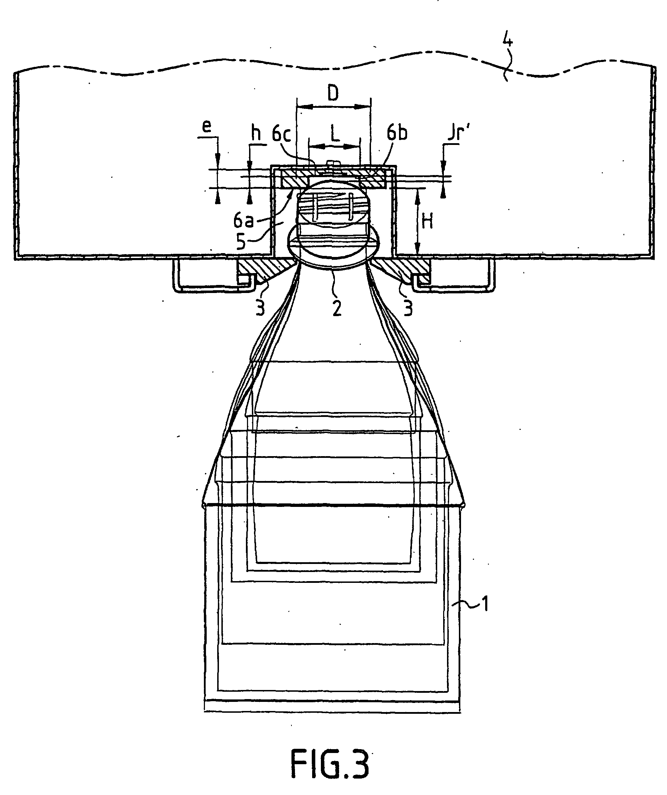

Dans la variante de la figure 3, la cale 6 a été perfectionnée en ce qu'elle présente un évidement central longitudinal 6b dans sa face inférieure 6a formant un canal central longitudinal. De manière essentielle selon l'invention, la largeur L de l'évidement 6b est strictement inférieure au diamètre D de l'extrémité supérieure 1d de la bouteille. Cette caractéristique permet à la face inférieure 6a de la cale 6 de remplir sa fonction de butée haute, en particulier en phase d'accumulation des bouteilles, lorsqu'une bouteille 1 remonte en position verticale par rapport aux rails de guidage 3. La partie centrale évidée 6b de la cale 6 permet avantageusement le basculement avant ou arrière de la bouteille 1 d'un angle B, de telle sorte qu'une portion de l'extrémité 1d de la bouteille remonte dans le canal formé par l'évidement 6b, sans venir au contact de la cale 6. Grâce à la structure de la cale 6 de la figure 3, il est donc avantageusement possible de choisir d'une part une épaisseur e de cale en sorte d'obtenir un jeu résiduel Jr faible lorsque la bouteille 1 est en position verticale et d'autre part d'adapter la géométrie de l'évidement 6b (c'est-à-dire principalement la largeur L de l'évidement 6b et sa hauteur h) de telle sorte qu'il existe un jeu résiduel Jr' (figure 3) entre la paroi de fond 6c de l'évidement 6b et l'extrémité supérieure 1d d'une bouteille 1 supportée par les guides sous-col 3 selon un angle de balancement avant ou arrière B donné. De préférence, la géométrie de l'évidement 6b sera choisie de telle sorte qu'il existe un jeu résiduel Jr' lorsque la bouteille 1 est inclinée selon un angle de basculement B avant ou arrière valant 45°.

Dans le cadre de cette variante de la figure 3, il est envisageable de ne pas mettre en oeuvre une cale rapportée, mais de concevoir d'emblée un convoyeur dont le canal de soufflage 5 comporte une paroi supérieure 5a dans laquelle est prévu un canal longitudinal équivalent et remplissant la même fonction que l'évidement central 6b de la cale 6. Dans ce cas, la hauteur du canal de soufflage est prévue suffisamment faible pour que la face inférieure de la paroi 5a, de part et d'autre du canal central de cette paroi, remplisse la fonction de butée haute. Dans une autre variante, il est également envisageable de mettre en oeuvre une cale 6 rapportée qui n'est pas une cale pleine dans l'épaisseur de laquelle a été réalisé un évidement, mais qui est par exemple une tôle, mise en forme en sorte de comporter un canal rentrant remplissant la même fonction que l'évidement central 6b. Enfin, il est également envisageable de mettre en oeuvre une cale rapportée formée de deux éléments longitudinaux distincts, fixés sur la face interne de la paroi supérieure 5a du canal de soufflage 5, en étant séparés l'un de l'autre par un canal de longueur L remplissant la même fonction que l'évidement central 6b de la cale 6 de la figure 3.

La mise en oeuvre d'une cale rapportée 6 d'épaisseur e calculée permet avantageusement d'adapter de manière simple les convoyeurs existants à un type donné de bouteilles en choisissant judicieusement l'épaisseur de la cale, pour réduire les risques de blocage des bouteilles en cas de remontée des bouteilles par rapport aux rails de guidage 3 du convoyeur. Dans les exemples particuliers illustrés, la géométrie de l'évidement central 6b de la cale 6 est en forme de U renversé, les parois latérales du U étant sensiblement orthogonales au fond 6c de l'évidement. Cette géométrie n'est toutefois pas limitative de l'invention. L'évidement central 6b pourrait avoir une forme géométrique courbe quelconque, et par exemple en arc de cercle, avec un rayon de courbure adapté au rayon de courbure de l'extrémité supérieure 1d des bouteilles 1. Egalement la cale 6 de la variante de la figure 1 présente dans cet exemple une section droite de forme rectangulaire. L'invention n'est bien entendu pas limitée à cette forme particulière de cale 6, la section droite de la cale 6 pouvant être quelconque, sachant qu'il suffit qu'il y ait une génératrice de contact entre la bouteille et la cale. La cale 6 dans la variante de la figure 1 pourrait par exemple présenter une section droite cylindrique, ou semi-cylindrique.

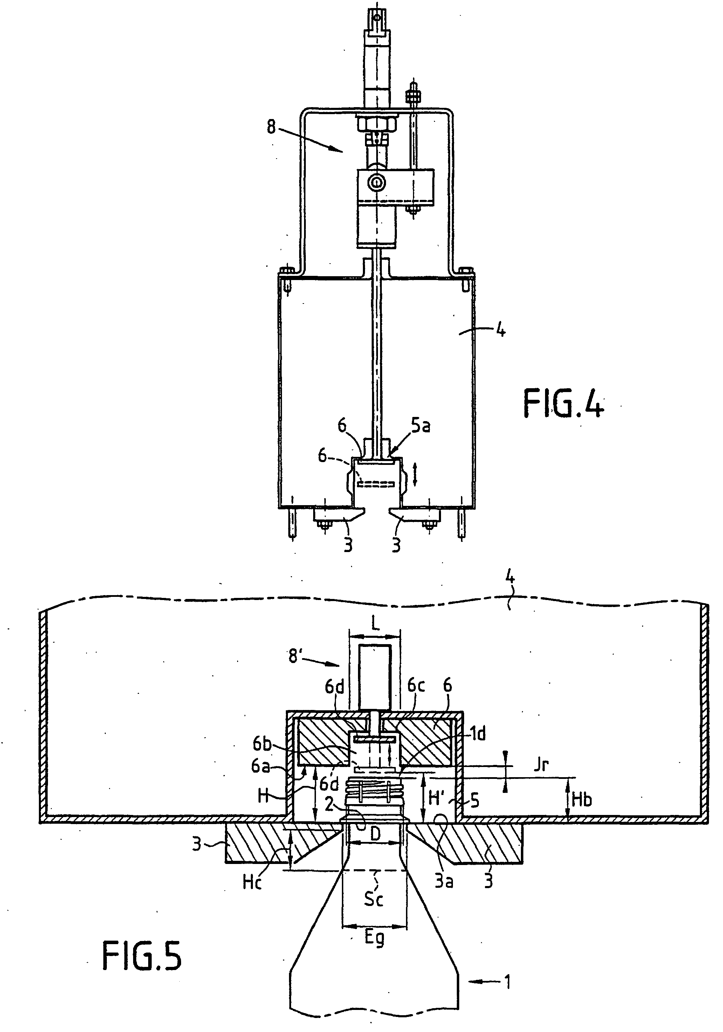

On a illustré à la figure 4 une autre variante perfectionnée de réalisation de l'invention, dans laquelle le convoyeur 4 est équipé d'une cale 6 longitudinale, de faible épaisseur, dont la position en hauteur est réglable. Dans l'exemple illustré, la cale 6 peut être réglée en hauteur entre deux positions haute et basse, au moyen d'un vérin pneumatique 8 à deux positions. En position haute, telle qu'illustrée en traits pleins sur la figure 4, la cale 6 vient par exemple au contact de la paroi supérieure 5a du canal de soufflage 5. Dans cette position, le jeu résiduel existant entre les bouteilles 1 et la cale 6 est maximum ; les bouteilles 1 peuvent être transportées librement sans que leur extrémité supérieure 1d ne vienne en contact avec la cale 6. En position basse (telle qu'illustrée par exemple en pointillés sur la figure 4), le jeu résiduel entre les bouteilles et la cale 6 est réglé à une valeur minimale. En pratique, le convoyeur à air sera découpé en une pluralité de tronçons successifs, chaque tronçon comportant une cale 6 dont la hauteur peut être réglée de manière indépendante par rapport aux cales 6 des autres tronçons. Les tronçons du convoyeur dans lesquels les bouteilles sont en phase de transport seront configurés de telle sorte que leur cale 6 est réglée en position haute. En revanche, dans les tronçons de convoyeur correspondant à des zones d'accumulation des bouteilles 1, on réglera avantageusement les cales 6 de ces tronçons en position basse, afin de réduire les risques de blocage des bouteilles en accumulation. La commande des vérins 8 associés à chaque cale 6 pourra être automatisée à partir de signaux de détection émis par des capteurs sans contact du type cellules photo-électriques ou capteurs ultrasons, positionnés respectivement au niveau de chaque tronçon, et permettant la détection automatique d'une accumulation de bouteilles dans un tronçon donné.

Si l'on compare la variante de la figure 4 à celle de la figure 3, la position basse de la cale 6 de la figure 4 correspond au niveau de la face inférieure 6a de la cale 6 de la figure 3, et la position haute correspond au niveau du fond 6c de l'évidement central longitudinal 6b de la cale 6 de la figure 3.

Dans une autre variante de réalisation, il est envisageable de modifier la variante de la figure 4 de telle sorte que la cale 6 puisse prendre plusieurs positions. En particulier, dans une variante perfectionnée, il est possible de prévoir, en mettant par exemple en oeuvre un vérin pneumatique 8 à trois positions, une position supplémentaire pour la cale 6, située au-dessous du niveau de la position basse de la figure 4 et correspondant à une position dite de déblocage. Cette position de déblocage est fixée en fonction de la géométrie des bouteilles 1 de telle sorte que dans cette position la cale 6 est suffisamment proche des guides sous-col 3 pour permettre le déblocage d'une bouteille 1 immobilisée accidentellement par exemple en position inclinée vers l'avant ou l'arrière.

Dans la variante de la figure 5, on retrouve la cale 6 avec évidement central de la variante de la figure 3. Dans cette variante de la figure 5, la butée haute comprend en outre une plaque longitudinale 6d, qui est logée dans l'évidement longitudinal 6b de la cale 6, et qui est mobile en translation dans un plan vertical en sorte de pouvoir être réglée en hauteur. Plus particulièrement, la position en hauteur de cette plaque 6d peut être réglée au moyen d'un vérin 8' à deux positions, entre une position haute (illustrée en traits pleins) dans laquelle la plaque 6d est proche du fond 6c de l'évidement longitudinal 6b. Cette position haute correspond à la position haute de la cale 6 de la variante de la figure 4. La position basse (illustrée en pointillés) correspond à une position de déblocage des bouteilles 1. Cette position de déblocage de la plaque 6d est située à un niveau intermédiaire entre d'une part la face inférieure 6a de la cale 6 et l'extrémité supérieure 1d d'une bouteille 1 supportée par les guides sous-col 3 en position verticale. En d'autres termes, si l'on se réfère à la figure 5, lorsque la plaque 6d est en position de déblocage, elle se situe à une distance H' par rapport à la face supérieure 3a des guides sous-col 3 qui est comprise d'une part entre la hauteur H et d'autre part la hauteur Hb correspondant à la hauteur de la partie supérieure de la bouteille 1, communément appelée buvant, qui s'étend entre l'extrémité supérieure 1d de la bouteille 1 et la collerette 2 (collerette comprise). De préférence, la hauteur H' sera prévue légèrement supérieure à la hauteur Hb. Il faut ici souligner que la hauteur H' correspondant à la position de déblocage de la plaque 6d doit de préférence être strictement supérieure à la hauteur Hb des bouteilles 1, afin d'éviter lors des opérations de déblocage un contact serrant des bouteilles 1 entre la plaque 6d et les guides sous-col 3.

## Revendications

1. Convoyeur pour articles pourvus d'une collerette (2) formant protubérance, ledit convoyeur comportant deux guides sous-col (3) espacés le long desquels les articles sont destinés à être transportés en étant suspendus sur les guides sous-col (3) par l'intermédiaire de leur collerette (2), **caractérisé en ce qu'**il comprend une cale (6) rapportée longitudinale, qui est montée au-dessus des guides sous-col (3) et qui a pour fonction de limiter la remontée des articles entre les guides sous-col (3).

2. convoyeur selon la revendication 1 pour articles comportant au-dessous de leur collerette (2) une portion de resserrement (1b) dont la section décroît en direction de la collerette, et passe par une section de contact (Sc) dont le diamètre est égal à l'écartement (Eg) des guides sous-col (3), **caractérisé en ce que** la cale (6) est prévue à une distance (H) des guides sous-col (3) qui est telle qu'il existe, entre la cale (6) et l'extrémité supérieure d'un article supporté en position verticale par les guides sous-col (3), un jeu résiduel (Jr) qui est strictement inférieur à la hauteur de contact (Hc) séparant les guides sous-col (3) et la section de contact (Sc) de cet article en position verticale.

3. Convoyeur selon l'une des revendications 1 ou 2 **caractérisé en ce que** la cale (6) comporte une face inférieure longitudinale (6a) à fonction de butée dans laquelle est prévu un canal central longitudinal (6b).

4. Convoyeur selon la revendication 3 **caractérisé en ce que** la largeur (L) du canal (6b) est strictement inférieure au diamètre (D) d'un article au niveau de son extrémité supérieure (1d).

5. Convoyeur selon la revendication 3 ou 4 **caractérisé en ce que** la géométrie du canal (6b) de la cale (6) est prévue de telle sorte qu'il existe un jeu résiduel (Jr') entre la cale (6) et l'extrémité supérieure d'un article supporté par les guides sous-col (3) selon un angle de basculement avant ou arrière de 45°.

6. Convoyeur selon l'une des revendications 1 à 5 **caractérisé en ce que** la position en hauteur de la cale n'étant pas réglable, l'épaisseur (e) de la cale (6) est choisie en fonction des articles à transporter.

7. Convoyeur selon l'une des revendications 1 à 5 **caractérisé en ce que** la cale (6) est réglable en hauteur par rapport aux guides sous-col (3).

8. Convoyeur selon la revendication 7 **caractérisé en ce que** la cale (6) est prévue pour être réglée dans au moins deux positions :
- une position haute dans laquelle les articles peuvent être transportés librement sans que leur extrémité supérieure ne vienne en contact avec la cale (6),
- une position basse, permettant de limiter la remontée des articles entre les guides sous-col (3), en particulier en phase d'accumulation.

9. Convoyeur selon la revendication 8 pour articles comportant au-dessous de leur collerette (2) une portion de resserrement (1b) dont la section décroît en direction de la collerette, et passe par une section de contact (Sc) dont le diamètre est égal à l'écartement (Eg) des guides sous-col (3), **caractérisé en ce que** la position basse est prévue de telle sorte que dans cette position il existe, entre la cale (6) et l'extrémité supérieure d'un article supporté en position verticale par les guides sous-col (3), un jeu résiduel (Jr) qui est strictement inférieur à la hauteur de contact (Hc) séparant les guides sous-col (3) et la section de contact (Sc) de cet article en position verticale.

10. Convoyeur selon la revendication 8 **caractérisé en ce que** la position haute est prévue de telle sorte qu'il existe un jeu résiduel (Jr') entre la cale (6) et l'extrémité supérieure d'un article supporté par les guides sous-col (3) selon un angle de basculement avant ou arrière de 45°.

11. Convoyeur selon l'une des revendications 7 à 10 **caractérisé en ce que** la cale (6) est conçue pour être réglée en hauteur dans une position dite de déblocage, suffisamment proche des guides sous-col (3) pour permettre le déblocage mécanique d'un article immobilisé accidentellement.

12. Convoyeur selon l'une des revendications 3 à 5 **caractérisé en ce qu'**il comprend une plaque longitudinale (6d), qui est montée au droit du canal central (6b) et dont la position en hauteur est réglable.

13. Convoyeur selon la revendication 12 **caractérisé en ce que** la plaque (6d) est prévue pour être réglée en hauteur dans au moins deux positions :
- une position haute dans laquelle la plaque (6d) est logée dans le canal central (6b) de la cale (6).
- une position basse de déblocage des articles dans laquelle la plaque (6d) est située au-dessous du niveau de la face inférieure (6a) à fonction de butée de la cale (6).

14. Convoyeur selon l'une quelconque des revendications 1 à 13 **caractérisé en ce qu'**il comprend en outre deux guides longitudinaux supérieurs (7) qui sont positionnés de part et d'autre du trajet des articles, et qui ont pour fonction de limiter l'angle (B) de basculement avant ou arrière des articles dans un plan vertical et dans leur direction de transport.

15. Convoyeur selon la revendication 14 **caractérisé en ce que** les deux guides supérieurs (7) sont réglés en positions de telle sorte que l'angle de balancement avant ou arrière (B) d'un article en cours de transport est d'une part inférieur ou égal à 30°, et de préférence inférieur ou égal à 25°, et d'autre part supérieur ou égal à 10°.

## Claims

1. A conveyor for articles each provided with an outwardly-projecting collar (2), said conveyor having two spaced-apart under-neck guides (3) along which the articles are to be transported by being suspended on the under-neck guides (3) via their collars (2), the conveyor being **characterized in that** it includes a longitudinal stop (6) fitted thereto, mounted above the under-neck guides (3) and serving to limit the up stroke available to articles between the under-neck guides (3).

2. A conveyor according to claim 1, for articles including a tapering portion (1b) beneath the collar (2), with the section of the tapering portion decreasing towards the collar and passing through a "contact" section (Sc) of diameter equal to the spacing (Eg) between the under-neck guides (3), the conveyor being **characterized in that** the stop (6) is provided at a distance (H) from the under-neck guides (3) such that residual clearance (Jr) exists between the stop (6) and the top end of an article when supported in the vertical position by the under-neck guides (3), which residual clearance (Jr) is less than the "contact" height (Hc) between the under-neck guides (3) and the contact section (Sc) of the article when in the vertical position.

3. A conveyor according to claim 1 or 2, **characterized in that** the stop (6) has a longitudinal bottom face (6a) that serves as an abutment and in which there is provided a longitudinal central channel (6b).

4. A conveyor according to claim 3 **characterized in that** the width (L) of the channel (6b) is less than the diameter (D) of an article at its top end (1d).

5. A conveyor according to claim 3 or 4, **characterized in that** the shape of the channel (6b) of the stop (6) is is designed in such a manner as to ensure that residual clearance (Jr') exists between the stop (6) and the top end of an article supported by the under-neck guides (3) when the article is at a forward or backward tilt angle of 45°.

6. A conveyor according to any one of claims 1 to 5, **characterized in that** the vertical position of the stop is not adjustable, and the thickness (e) of the stop (6) is selected as a function of the articles to be transported.

7. A conveyor according to any one of claims 1 to 5, **characterized in that** the height of the stop (6) relative to the under-neck guides (3) is adjustable.

8. A conveyor according to claim 7, **characterized in that** the stop (6) is designed to be adjustable to occupy at least two positions:
· a high position in which the articles can be transported freely without their top ends coming into contact with the stop (6); and
· a low position for limiting the up stroke available to articles between the under-neck guides (3), in particular while articles are accumulating.

9. A conveyor according to claim 8, for articles including a tapering portion (1b) beneath the collar (2), the section of the tapering portion decreasing towards the collar, and passing through a contact section (Sc) of diameter equal to the spacing (Eg) between the under-neck guides (3), the conveyor being **characterized in that** the low position is designed in such a manner that there exists residual clearance (Jr) in this position between the stop (6) and the top end of an article supported in the vertical position by the under-neck guides (3), which residual clearance (Jr) is less than the contact height (Hc) between the under-neck guides (3) and the contact section (Sc) of said article when in the vertical position.

10. A conveyor according to claim 8, **characterized in that** the high position is designed in such a manner that residual clearance (Jr') exists between the stop (6) and the top end of an article supported by the under-neck guides (3) when the article is at a forward or backward tilt angle of 45°.

11. A conveyor according to any one of claims 7 to 10, **characterized in that** the stop (6) is designed to be adjustable in height so as to occupy an "unjamming" position that is close enough to the under-neck guides (3) to enable an article that has become jammed accidentally to be unjammed mechanically.

12. A conveyor according to anyone of claim 3 to 5, **characterized in that** it includes a longitudinal plate (6d) mounted in register with the central channel (6b) and having a vertical position that is adjustable.

13. A conveyor according to claim 12, **characterized in that** the plate (6d) is designed to be adjusted vertically to occupy at least two positions:
· a high position in which the plate (6d) is received in the central channel (6b) of the stop (6); and
· a low position for unjamming articles, in which position the plate (6d) is situated beneath the level of the bottom face (6a) of the stop (6) that serves as an abutment.

14. A conveyor according to any one of claims 1 to 13, **characterized in that** it further comprises two top longitudinal guides (7) which are positioned on either side of the path of the articles and which serve to limit the forward or backward tilt angles (B) of the articles in a vertical plane and in their transport direction.

15. A conveyor according to claim 14, **characterized in that** the two top guides (7) are adjusted in position in such a manner that the forward and backward tilt angles (B) of an article being transported are less than or equal to 30°, and preferably less than or equal to 25°, and are also greater than or equal to 10°.

## Patentansprüche

1. Fördereinrichtung für Gegenstände mit einem einen Vorsprung bildenden Kragen (2), wobei die Fördereinrichtung zwei beabstandete Unterhals-Führungen (3) aufweist, entlang derer die Gegenstände transportiert werden sollen, wobei sie über ihren Kragen (2) an den Unterhals-Führungen (3) aufgehängt sind, **dadurch gekennzeichnet, daß** sie ein eingesetztes, in Längsrichtung verlaufendes Füllstück (6) aufweist, das über den Unterhals-Führungen (3) angebracht ist und die Aufgabe hat, das Aufsteigen der Gegenstände zwischen den Unterhals-Führungen (3) zu begrenzen.

2. Fördereinrichtung nach Anspruch 1 für Gegenstände, die unter ihrem Kragen (2) einen Verengungsabschnitt (1b) aufweisen, dessen Querschnitt sich in Richtung des Kragens verringert und über einen Kontaktquerschnitt (Sc) verläuft, dessen Durchmesser gleich dem Abstand (Eg) der Unterhals-Führungen (3) ist, **dadurch gekennzeichnet, daß** das Füllstück (6) in einem solchen Abstand (H) zu den Unterhals-Führungen (3) vorgesehen ist, daß zwischen dem Füllstück (6) und dem oberen Ende eines in senkrechter Stellung von den Unterhals-Führungen (3) gehaltenen Gegenstands ein Restspiel (Jr) bleibt, das strikt geringer ist als die Kontakthöhe (Hc), die die Unterhals-Führungen (3) und den Kontaktquerschnitt (Sc) dieses Gegenstands in der senkrechten Stellung trennt.

3. Fördereinrichtung nach einem der Ansprüche 1 oder 2, **dadurch gekennzeichnet, daß** das Füllstück (6) eine untere Längsfläche (6a) mit Anschlagfunktion aufweist, in der ein zentraler Längskanal (6b) vorgesehen ist.

4. Fördereinrichtung nach Ansprach 3, **dadurch gekennzeichnet, dass** die Breite (L) des Längskanal (6b) ist strikt kleiner als der Durchmesser (D) eines Gegenstands in Höhe seines oberen Endes (1d).

5. Fördereinrichtung nach einem der Anspruch 3 oder 4, **dadurch gekennzeichnet, dass** die Geometrie des Längskanal (6b) des Füllstück (6) so vorgesehen ist, dass ein Restspiel (Jr') zwischen dem Füllstück (6) und dem oberen Ende eines von den Unterhals-Führungen (3) mit einem Vor-oder Rückschwenkwinkel von 45° gehaltenen Gegenstands vorhanden ist.

6. Fördereinrichtung nach einem der Ansprüche 1 bis 5, **dadurch gekennzeichnet, daß**, wenn das Füllstück nicht höhenverstellbar ist, die Dicke (e) des Füllstücks (6) in Abhängigkeit von den zu transportierenden Gegenständen gewählt wird.

7. Fördereinrichtung nach einem der Ansprüche 1 bis 5, **dadurch gekennzeichnet, daß** das Füllstück (6) in Bezug auf die Unterhals-Führungen (3) höhenverstellbar ist.

8. Fördereinrichtung nach Anspruch 7, **dadurch gekennzeichnet, daß** das Füllstück (6) vorgesehen ist, um in mindestens zwei Stellungen eingestellt zu werden:
- eine obere Stellung, in der die Gegenstände frei transportiert werden können, ohne daß ihr oberes Ende mit dem Füllstück (6) in Berührung gelangt,
- eine untere Stellung, die es ermöglicht, das Aufsteigen der Gegenstände zwischen den Unterhals-Führungen (3), insbesondere in der Phase der Anhäufung, zu begrenzen.

9. Fördereinrichtung nach Anspruch 8 für Gegenstände, die unter ihrem Kragen (2) einen Verengungsabschnitt (1b) aufweisen, dessen Querschnitt sich in Richtung des Kragens verringert und über einen Kontaktquerschnitt (Sc) verläuft, dessen Durchmesser gleich dem Abstand (Eg) der Unterhals-Führungen (3) ist, **dadurch gekennzeichnet, daß** die untere Stellung so vorgesehen ist, daß in dieser Stellung zwischen dem Füllstück (6) und dem oberen Ende eines in senkrechter Stellung von den Unterhals-Führungen (3) gehaltenen Gegenstands ein Restspiel (Jr) vorhanden ist, das strikt geringer ist als die Kontakthöhe (Hc), die die Unterhals-Führungen (3) und den Kontaktquerschnitt (Sc) dieses Gegenstands in der senkrechten Stellung trennt.

10. Fördereinrichtung nach Anspruch 8, **dadurch gekennzeichnet, daß** die obere Stellung so vorgesehen ist, daß ein Restspiel (Jr') zwischen dem Füllstück (6) und dem oberen Ende eines von den Unterhals-Führungen (3) mit einem Vor- oder Rückschwenkwinkel von 45° gehaltenen Gegenstands vorhanden ist.

11. Fördereinrichtung nach einem der Ansprüche 7 bis 10, **dadurch gekennzeichnet, daß** das Füllstück (6) so ausgebildet ist, daß es in einer sogenannten Freigabestellung höhenverstellt werden kann, die nahe genug an den Unterhals-Führungen (3) ist, um die mechanische Freigabe eines zufällig blockierten Gegenstands zu ermöglichen.

12. Fördereinrichtung nach einem der Ansprüche 3 bis 5, **dadurch gekennzeichnet, dass** sie eine Längsplatte (6d) aufweist, die im rechten Winkel zum zentralen Kanal (6b) angebracht und höhenverstellbar ist.

13. Fördereinrichtung nach Anspruch 12, **dadurch gekennzeichnet, daß** die Platte (6d) vorgesehen ist, um in mindestens zwei Stellungen höhenverstellt zu werden:
- eine obere Stellung, in der die Platte (6d) sich im zentralen Kanal (6b) des Füllstücks (6) befindet,
- eine untere Freigabestellung der Gegenstände, in der die Platte (6d) sich unter der Höhe der Unterseite (6a) mit Anschlagfunktion des Füllstücks (6) befindet.

14. Fördereinrichtung nach einem der Ansprüche 1 bis 13, **dadurch gekennzeichnet, daß** sie weiter zwei obere Längsführungen (7) aufweist, die zu beiden Seiten des Wegs der Gegenstände angeordnet sind und deren Aufgabe es ist, den Vor- oder Rückschwenkwinkel (B) der Gegenstände in einer senkrechten Ebene und in ihrer Transportrichtung zu begrenzen.

15. Fördereinrichtung nach Anspruch 14, **dadurch gekennzeichnet, daß** die Stellungen der beiden oberen Führungen (7) so geregelt sind, daß der Vor- oder Rückschwenkwinkel (B) eines Gegenstands während des Transports einerseits kleiner oder gleich 30°, und vorzugsweise kleiner oder gleich 25°, und andererseits größer oder gleich 10° ist.
